# EUROPÄISCHE PATENTSCHRIFT

(11) **EP 1 629 632 B1**
(45) Veröffentlichungstag und Bekanntmachung des Hinweises auf die Patenterteilung: **17.03.2010**
(21) Anmeldenummer: 04739399.6
(22) Anmeldetag: 27.05.2004
(51) Int. Cl.: H04L 12/26, H04W 24/00

(54) **Verfahren und Testgerät zum ermitteln einer Fehlerrate**
Method and test device for detecting an error rate
Procédé et appareil de controle permettant de determiner un taux d'erreur

(30) Priorität: 30.05.2003 DE 10324745
(43) Veröffentlichungstag der Anmeldung: 01.03.2006
(73) Patentinhaber: Rohde & Schwarz GmbH & Co. KG, 81671 München (DE)
(72) Erfinder: SEEBACHER, Pirmin, 83022 Rosenheim (DE); BÄDER, Uwe, 85521 Ottobrunn (DE); BRAUN, Thomas, 80686 München (DE)
(74) Vertreter: Körfer, Thomas
(86) Internationale Anmeldenummer: PCT/EP2004/005729
(87) Internationale Veröffentlichungsnummer: WO 2004/107653

(56) Entgegenhaltungen:
- DE-A- 10 063 243
- US-A- 5 359 609
- US-A- 6 069 876
- 3GPP: "3rd Generation Partnership Project; Technical Specification Group Radio Access Network; Terminal logical test interface; Special conformance testing functions (Release 5)" TS 34.109, [Online] März 2003 (2003-03), Seiten 1-31, XP002299095 Gefunden im Internet: URL:http://www.3gpp.org/ftp/Specs/archive/ 34_series/34.109/34109-530.zip> [gefunden am 2004-10-04]
- 3GPP: "3rd Generation Partnership Project; Technical Specification Group GSM EDGE Radio Access Network; Individual equipment type requirements and interworking; Special conformance testing functions; (Release 5)" TS 44.014, [Online] Februar 2003 (2003-02), Seiten 1-45, XP002299096 Gefunden im Internet: URL:http://www.3gpp.org/ftp/Specs/archive/ 44_series/44.014/44014-510.zip> [gefunden am 2004-10-04]
- 3GPP: "3rd Generation Partnership Project; Technical Specification Group Terminals; Terminal conformance specification; Radio transmission and reception (FDD) (Release 1999)" TS 34.121, [Online] März 2003 (2003-03), Seiten 1, 303-330, XP002299097 Gefunden im Internet: URL:http://www.3gpp.org/ftp/Specs/archive/ 34_series/34.121/34121-3c0.zip> [gefunden am 2004-10-04]
- "3rd Generation Partnership Project; Technical Specification Group Terminal; Terminal Conformance Specification; Radio Transmission and Reception (TDD) (Release 4)" TS 34.122, [Online] März 2003 (2003-03), Seiten 1,293-312, XP002299098 Gefunden im Internet: URL:http://www.3gpp.org/ftp/Specs/archive/ 34_series/34.122/34122-470.zip> [gefunden am 2004-10-04]

## Beschreibung

Die Erfindung betrifft ein Verfahren und ein Testgerät zum Ermitteln einer Fehlerrate einer Empfangseinrichtung.

Zur Bestimmung der Qualität einer Signal-Empfangseinrichtung wird an ein zu prüfendes Gerät, das die zu testende Empfangseinrichtung enthält, ein Testsignal gesendet. Das Testsignal wird gemäß einem Übertragungsprotokoll aus einem ersten Datenblock erzeugt. Das zu prüfende Gerät empfängt das Testsignal und wertet es aus, d.h. das zu prüfende Gerät macht Bearbeitungen rückgängig, die aufgrund des Übertragungsprotokolls durchgeführt wurden, um die ursprünglichen, in dem Testsignal enthaltenen Daten wieder zu erhalten. Im Idealfall, bei dem sowohl auf der Übertragungsstrecke als auch bei der Auswertung keine Fehler aufgetreten sind, stimmt das ausgewertete Testsignal des zu prüfenden Geräts mit dem Inhalt des ursprünglich gesendeten ersten Datenblocks vollständig über ein, d.h. es ist bitweise identisch.

Aus dem ausgewerteten Testsignal wird von dem zu prüfenden Gerät nun seinerseits ein zweiter Datenblock erzeugt, der analog zu dem ersten Datenblock entsprechend dem verwendeten Übertragungsprotokoll in einem Antwortsignal aufbereitet wird. Dieses Antwortsignal wird von dem zu prüfenden Gerät an das Testgerät zurückgesendet. Das. Testgerät kann nun den Inhalt des ersten Datenblocks mit dem Inhalt des ausgewerteten Antwortsignals, der die Daten des zweiten Datenblocks enthält, vergleichen und damit aus den Abweichungen zwischen dem Inhalt des ersten Datenblocks und dem Inhalt des zweiten Datenblocks beispielsweise eine Bitfehlerrate (BER) bestimmen. Zum Vergleich werden die ersten und zweiten Datenblöcke bitweise miteinander verglichen. Der erste und der zweite Datenblock weisen üblicherweise eine gleiche Länge auf, da für beide Übertragungsrichtungen identische Übertragungsraten verwendet werden.

Bei diesem bekannten Verfahren ist es nachteilig, dass die Fähigkeit moderner Übertragungssysteme, in den beiden Übertragungsrichtungen unterschiedliche Datenraten zu realisieren, unberücksichtigt bleibt. Durch die Nichtauslastung einer Übertragungsrichtung ist die Messung einer Fehlerrate in ihrer Aussagekraft begrenzt, da vielfach bei einer Erhöhung der Datenrate auch die Fehlerrate des entsprechenden zu prüfenden Geräts bzw. dessen Empfangseinrichtung steigt.

In der deutschen offenlegungsschrift DE 100 63 243 A1 wird ein Testverfahren einer Basisstation zum Ermitteln einer Bitfehlerrate eines Mobilfunkgeräts gemäß dem GSM-Mobilfunkstandard für asymmetrische Datenraten offenbart. Das Mobilfunkgerät wird von der Basisstation aufgefordert, nur die empfangenen Daten aus einem bestimmten von mehreren parallel betriebenen Downlink-Zeitschlitzen in einem einzigen Uplink-Zeitschlitz an die Basisstation zurückzusenden.

In dem Mobilfunkstandard für Konformitätstests 3GPP TS 34.109 V5.3.0 wird ein erster Test zur Ermittlung einer Bitfehlerrate eines zu testenden Mobilfunkgeräts bei symmetrischen Übertragungsraten durch bitweisen Vergleich der von dem Testgerät gesendeten und erhaltenen Daten offenbart. Es werden zwei weitere Testverfahren zur Ermittlung einer Blockfehlerrate mit Datenblöcken unterschiedlicher Blocklänge in dem Downlink und dem Uplink offenbart.

Es ist die Aufgabe der Erfindung, ein Verfahren und ein Testgerät zum Ermitteln einer Fehlerrate zu schaffen, der bzw. das ein aussagekräftiges Messergebnis für die Nutzung unterschiedlicher Datenraten eines bidirektionalen Kanals liefert.

Die Aufgabe wird durch das erfindungsgemässe Verfahren nach Anspruch 1 oder Anspruch 6 und das erfindungsgemässe Testgerät nach Anspruch 14 gelöst.

Bei dem erfindungsgemässen Verfahren wird von einem Testgerät in einer ersten Übertragungsrichtung ein Testsignal an ein zu prüfendes Gerät gesendet. Das Testsignal wird aus einem ersten Datenblock oder einer ersten Gruppe von Datenblöcken erzeugt, deren Inhalt ebenfalls von dem Testgerät festgelegt wird. Dem ersten Datenblock wird eine Prüfsumme hinzugefügt oder jedem Datenblock der ersten Gruppe wird eine Prüfsumme hinzugefügt. Das zu prüfende Gerät empfängt das Testsignal und wertet es aus, wobei es im Idealfall, also bei einer Fehlerrate von Null Prozent, den vollständigen, bitweise identischen Inhalt des ersten Datenblocks bzw. der ersten Gruppe von Datenblöcken erhält. Das Auswerten des Testsignals umfasst die Durchführung einer Fehlerkorrektur. Dieses ausgewertete Testsignal wird von dem zu prüfenden Gerät zum Erzeugen eines zweiten Datenblocks bzw. einer zweiten Gruppe von Datenblöcken verwendet, aus denen nun ihrerseits von dem zu prüfenden Gerät ein Antwortsignal generiert wird.

Der zweite Datenblock, der von dem zu prüfenden Gerät erzeugt wird, unterscheidet sich dabei in der Länge von dem von dem Testgerät erzeugten ersten Datenblock. Die Länge der Datenblöcke für die erste oder zweite Übertragungsrichtung ist dabei jeweils abhängig von der Datenrate der Übertragungsrichtung. Im Falle einer fehlerfreien Übertragung ist der Inhalt des kürzeren Datenblocks mit einem bestimmten Abschnitt des längeren Datenblocks identisch. Dabei kann sowohl der erste Datenblock länger sein als der zweite Datenblock, wie es typischerweise bei Mobilfunksystemen der dritten Generation (z. B. UMTS) im Downlink der Fall ist, als auch der zweite Datenblock länger sein als der erste. Letzteres kann z. B. auftreten wenn eine Basisstation eines Mobilfunknetzes getestet wird.

Alternativ kann die unterschiedliche Datenrate auch durch eine Bildung von Gruppen aus mehreren Datenblöcken erfolgen, wobei eine unterschiedliche Anzahl der Datenblöcke einer ersten bzw. zweiten Gruppe in den beiden Übertragungsrichtungen verwendet wird. Bei einer fehlerfreien Übertragung stimmen dann die Datenblöcke aus der Gruppe mit der geringeren Anzahl von Datenblöcken mit einer bestimmten Auswahl an Datenblöcken der Gruppe mit der grösseren Anzahl von Datenblöcken bitweise überein.

Diese Übereinstimmung trifft zumindest auf Abschnitte von Datenblöcken zu, wenn zusätzlich zu der unterschiedlichen Anzahl an Datenblöcken in der ersten bzw. zweiten Gruppe auch eine unterschiedliche Länge der Datenblöcke für die erste und die zweite Gruppe gewählt wird.

Das Testgerät empfängt nun das Antwortsignal und wertet es aus. Der in dem ersten Datenblock und dem zweiten Datenblock bei fehlerfreier Übertragung übereinstimmende Abschnitt bzw. die bei fehlerfreier Übertragung zumindest abschnittsweise übereinstimmenden Datenblöcke der ersten und der zweiten Gruppe werden von dem Testgerät auf Übereinstimmung überprüft. Hierzu wird bei Verwendung unterschiedlicher Datenblocklängen bitweise das ausgewertete Antwortsignal bzw. ein Abschnitt daraus mit dem Inhalt eines bestimmten Abschnitts des ersten Datenblocks bzw. dem vollständigen ersten Datenblock verglichen. Aus den sich daraus ergebenden Abweichungen werden dann durch das Testgerät zum Beispiel eine Bitfehlerrate oder eine Blockfehlerrate ermittelt. Die Auswertung bei Verwendung einer unterschiedlicher Anzahl von Datenblöcken in der ersten und der zweiten Gruppe erfolgt entsprechend durch bitweisen Vergleich der korrespondierenden Datenblöcke der ersten und der zweiten Gruppe. Bei zusätzlich unterschiedlicher Länge werden die entsprechenden Abschnitte der korrespondierenden Datenblöcke bitweise miteinander verglichen.

Solch ein Auswertezyklus wird mehrfach wiederholt, so dass aus einer Vielzahl von gesendeten Testsignalen und empfangenen Antwortsignalen eine statistisch abgesicherte Fehlerrate ermittelt wird.

Die Unteransprüche betreffen vorteilhafte Weiterbildungen des erfindungsgemäßen Verfahrens.

Insbesondere ist es zum Ermitteln der Leistungsfähigkeit einer Empfangseinheit vorteilhaft, in der ersten Übertragungsrichtung die maximal mögliche Datenrate einzusetzen. Die Qualität der Empfangseinrichtung variiert häufig mit der eingesetzten Datenrate, so dass sich durch die Verwendung der höchsten realisierbaren Datenrate die Fehlerrate der Empfangseinrichtung unter maximaler Belastung ermitteln lässt, da hier pro Zeiteinheit die größte Datenmenge verarbeitet werden muss. Damit ergibt sich ein Vergleichskriterium für den kritischsten Anwendungsfall.

Ein weiterer Vorteil ist es, anstelle eines Hochfrequenzsignals zwischen dem Testgerät und dem zu prüfenden Gerät ein Basisbandsignal zu übertragen. Fehler, die in der weiteren Verarbeitung des Basisbandsignals beim Erzeugen oder z.B. Heruntermischen eines hochfrequenten Sendesignals entstehen, werden damit ausgeschlossen, so dass sich gezielt diejenigen Komponenten testen lassen, welche die Verarbeitung des Basisbandsignals betreffen. Zum Übertragen des Basisbandsignals wird sowohl an dem Testgerät als auch an dem zu prüfenden Gerät das Basisbandsignal an entsprechender Stelle der Signalverarbeitung ausgefasst.

Bevorzugte Ausführungsbeispiele des erfindungsgemäßen Verfahrens sind in der Zeichnung dargestellt und werden in der nachfolgenden Beschreibung näher erläutert. Es zeigen:
- Fig. 1: eine stark vereinfachte Darstellung einer ersten Anordnung zur Durchführung des erfindungsgemäßen Verfahrens,
- Fig. 2: eine stark vereinfachte Darstellung einer zweiten Anordnung zur Durchführung des erfindungsgemäßen Verfahrens,
- Fig. 3: eine schematische Darstellung eines ersten Beispiels der Signalverarbeitung zur Fehlerkorrektur,
- Fig. 4: eine schematische Darstellung eines zweiten Beispiels der Signalverarbeitung zur Fehlerkorrektur,
- Fig. 5: eine schematische Darstellung der Verarbeitung von Datenblöcken unterschiedliche Länge in beiden Übertragungsrichtungen,
- Fig. 6: eine beispielhafte, tabellarische Auflistung für die in einer ersten und einer zweiten Übertragungsrichtung verwendeten Verbindungsparameter,
- Fig. 7: eine schematische Darstellung eines ersten Beispiels zur Verarbeitung von Gruppen von Datenblöcken mit unterschiedlicher Anzahl von Datenblöcken in beiden Übertragungsrichtungen und
- Fig. 8: eine schematische Darstellung eines zweiten Beispiels zur Verarbeitung von Gruppen von Datenblöcken mit unterschiedlicher Anzahl von Datenblöcken in beiden Übertragungsrichtungen.

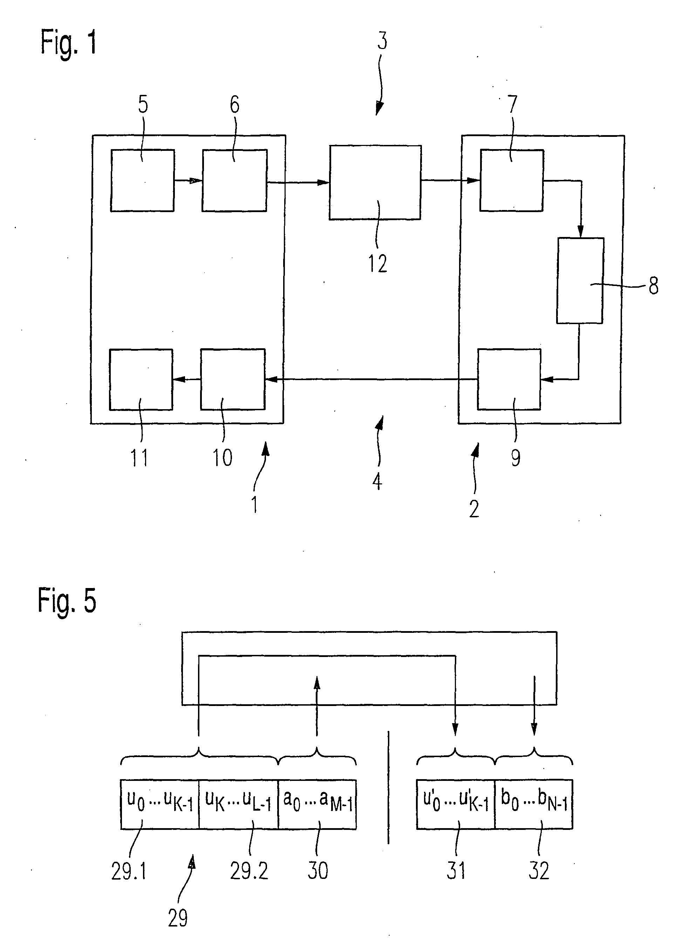

Fig. 1 zeigt schematisch den Ablauf zur Ermittlung einer Fehlerrate eines zu prüfenden Geräts. Die nachfolgenden Ausführungen betreffen eine Anwendung bei einem Mobilfunksystem, insbesondere der dritten Generation, wobei ausdrücklich darauf hingewiesen wird, dass das erfindungsgemäße Verfahren auch für andere Kommunikationssysteme, bei denen in einer ersten Übertragungsrichtung und in einer zweiten Übertragungsrichtung unterschiedliche Datenraten realisierbar sind, anwendbar ist. Ein solches System ist das Internet, für das sich mit dem erfindungsgemäßen Verfahren z.B. das verwendete Modem testen läßt.

In der Fig. 1 wird von einem Testgerät 1 eine Verbindung zu einem zu prüfenden Gerät 2 aufgebaut, wobei das zu prüfende Gerät 2 im vorliegenden Beispiel ein Mobilfunkgerät ist. Bei dem Aufbau der Verbindung zwischen dem Testgerät 1 und dem zu prüfenden Gerät 2 werden von dem Testgerät 1 durch Emulieren einer Basisstation alle Parameter festgelegt, die zum Betreiben eines Mobilfunkgeräts in einem bestimmten Mobilfunknetz erforderlich sind. Der Aufbau der Verbindung erfolgt daher entsprechend den Spezifikationen des jeweils verwendeten Mobilfunkstandards bzw. Übertragungsprotokolls.

Die Verbindung zwischen dem Testgerät 1 und dem zu prüfenden Gerät 2 wird in einer ersten Übertragungsrichtung 3 (Downlink) und einer zweiten Übertragungsrichtung 4 (Uplink) aufgebaut, wobei zur Übertragung von Informationen zwischen dem Testgerät 1 und dem zu prüfenden Gerät 2 sowohl eine Luftschnittstelle als auch eine Kabelverbindung verwendet werden kann.

Zum Ermitteln der Fehlerrate ist es erforderlich, dem zu prüfenden Gerät 2 eine bekannte Testsequenz, also eine bestimmte binäre Datenfolge, zu übermitteln und anschließend zu überprüfen, ob durch das zu prüfende Gerät 2 der Inhalt der dem Testgerät 1 bekannten Testsequenz richtig empfangen und ausgewertet wurde. Zunächst wird in dem Testgerät 1 in einem Sequenzgenerator 5 eine Testsequenz als erster Datenblock erzeugt, die aus einer bestimmten Bitfolge besteht. Die verwendeten Bitfolgen können sich anwendungsspezifisch unterscheiden und damit auf das jeweils zu testende System abgestimmt sein.

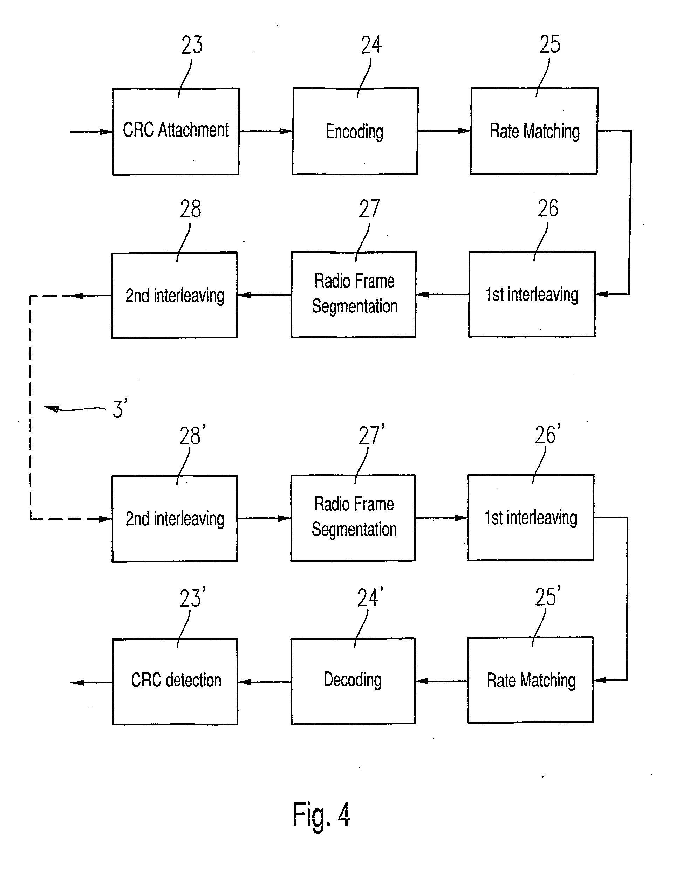

Diese Testsequenz wird anschließend einem ersten Fehlerkorrekturglied 6 zugeführt, welches die Testsequenz weiterverarbeitet, um das Entstehen von Übertragungsfehlern zu verhindern bzw. eine Korrektur von Fehlern zu ermöglichen. Die Verarbeitung der Testsequenz in dem ersten Fehlerkorrekturglied 6 wird nachfolgend noch unter Bezugnahme auf Fig. 4 erläutert.

Die in dem Sequenzgenerator 5 erzeugte Testsequenz wird in der ersten Übertragungsrichtung 3 als Testsignal an das zu prüfende Gerät 2 gesendet. In einem zweiten Fehlerkorrekturglied 7 des zu prüfenden Geräts 2 wird durch entsprechende Maßnahmen die Bearbeitung der Testsequenz in dem ersten Fehlerkorrekturglied 6 rückgängig gemacht, so dass im Falle einer idealen Übertragung in der ersten Übertragungsrichtung 3 bzw. einer optimalen Fehlerkorrektur an dem Ausgang des zweiten Fehlerkorrekturglieds 7 des zu prüfenden Geräts 2 die ursprüngliche Testsequenz vollständig rekonstruiert ist.

Beim Übertragen des Testsignals oder dem Empfangen und Auswerten des Testsignals werden in einem realen System dagegen zwangsläufig zumindest teilweise Fehler entstehen. Diese führen dazu, dass nach dem Auswerten des Testsignals am Ausgang des zweiten Fehlerkorrekturglieds 7 eine Bitfolge vorliegt, welche sich inhaltlich von der ursprünglich in dem Sequenzgenerator 5 erzeugten Testsequenz unterscheidet. Diese Bitfolge des ausgewerteten Testsignals wird von dem zu prüfenden Gerät 2 verwendet, um daraus einen zweiten Datenblock und daraus wiederum ein Antwortsignal zu erzeugen.

Hierzu wird ein Testabschnitt 8 verwendet ("Test Loop"), welcher aus dem ausgewerteten Testsignal eine Antwortsequenz generiert, die den Anforderungen der zwischen dem Testgerät 1 und dem zu prüfenden Gerät 2 etablierten Verbindung, insbesondere der zweiten Übertragungsrichtung entspricht. Für das Beispiel, dass die Länge der Datenblöcke, die in der ersten Übertragungsrichtung 3 an das zu prüfende Gerät 2 gesendet werden, größer ist, als die Länge der Datenblöcke, die in der zweiten Übertragungsrichtung 4 von dem zu prüfenden Gerät 2 zurück an das Testgerät 1 gesendet werden, werden beispielsweise nur diejenigen Daten beginnend mit dem ersten Bit im Block des ausgewerteten Testsignals verwendet, die zum Erzeugen des zweiten Datenblocks kürzerer Länge erforderlich sind. Anhand der Beschreibung von Fig. 5 wird dies nachfolgend noch verdeutlicht.

Von dem Testabschnitt 8 wird eine Antwortsequenz als zweiter Datenblock erzeugt, die, mit Ausnahme der falsch oder nicht erkannten Bits, einem entsprechenden Abschnitt der ursprünglich generierten Testsequenz entspricht. Dieser zweite Datenblock kann zur Fehlerkorrektur in einem dritten Fehlerkorrekturglied 9 bearbeitet werden, bevor er in der zweiten Übertragungsrichtung 4 als Antwortsignal zurück an das Testgerät 1 gesendet wird. In dem Testgerät 1 ist ein entsprechendes viertes Fehlerkorrekturglied 10 vorgesehen, welches die Maßnahmen des dritten Fehlerkorrekturglieds 9 zur Korrektur von eventuell auf der Übertragungsstrecke in der zweiten Übertragungsrichtung 4 auftretenden Fehlern umkehrt.

Das empfangene und ausgewertete Antwortsignal wird einer Auswerteeinheit 11 des Testgeräts 1 zugeführt, in der aus dem ausgewerteten Antwortsignal und der dem Testgerät 1 ohnehin bekannten Testsequenz zum Beispiel eine Bitfehlerrate (BER) ermittelt wird. Hierzu wird von der Auswerteeinheit 11 bitweise derjenige Abschnitt der Testsequenz mit dem ausgewerteten Antwortsignal verglichen, aus dem in dem Testabschnitt 8 die Antwortsequenz des zweiten Datenblocks erzeugt wurde. Die Verwendung von einem bestimmten Abschnitt der Testsequenz zum Erzeugen der Antwortsequenz des zweiten Datenblocks in dem Testabschnitt 8 wird dabei durch den für das jeweilige System gültigen Standard vorgeschrieben.

Im dargestellten Beispiel eines Mobilfunkgeräts der dritten Generation werden, wie dies vorstehend bereits erläutert wurde, jeweils die ersten, zusammenhängenden Daten der Testsequenz verwendet, um daraus die Antwortsequenz des zweiten Datenblocks zu erzeugen, wenn die Datenraten der ersten Übertragungsrichtung 3 höher ist als in der zweiten Übertragungsrichtung 4. Um tatsächlich die Qualität der Empfangseinrichtung des zu prüfenden Geräts 2 durch Ermitteln einer solchen Bitfehlerrate bestimmen zu können, ist es erforderlich, dass die Übertragung in der zweiten Übertragungsrichtung 4 möglichst ungestört erfolgt, um sicherzustellen, dass das ausgewertete Antwortsignal tatsächlich exakt mit der Antwortsequenz des zweiten Datenblocks übereinstimmt.

Umgekehrt wird beispielsweise mit einem Fading-Simulator 12 eine reale Übertragungsstrecke in der ersten Übertragungsrichtung 3 simuliert, um z.B. eine Pegelabschwächung oder zeitliche Verschiebungen bei einer realen Übertragung im Downlink zu simulieren und deren Einfluss auf die exakte Auswertung des Testsignals durch die Empfangseinrichtung des zu prüfenden Geräts 2 zu ermitteln.

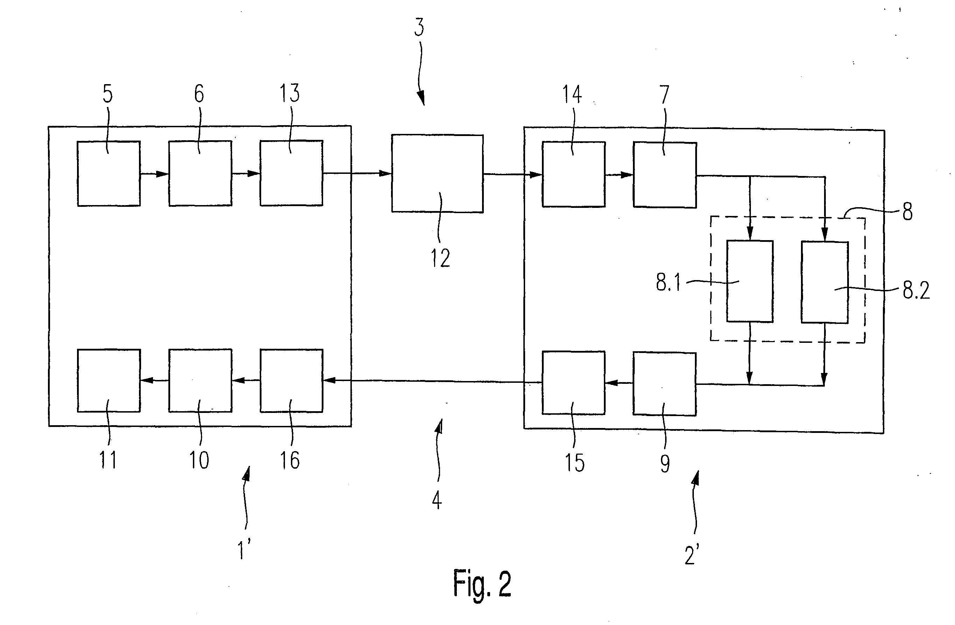

In Fig. 2 ist eine detaillierte Ansicht eines Testgeräts 1' sowie eines zu prüfenden Geräts 2' dargestellt. Die unter Bezugnahme auf Fig. 1 bereits erläuterten Komponenten des zur Durchführung des erfindungsgemäßen Verfahrens verwendeten Testgeräts 1 und zu prüfenden Geräts 2 sind in der Fig. 2 mit identischen Bezugszeichen bezeichnet. Um unnötige Wiederholungen zu vermeiden wird auf deren erneute Beschreibung verzichtet.

In der Fig. 2 ist bei dem dort dargestellten Testgerät 1' zusätzlich zu dem Sequenzgenerator 5 und dem ersten Fehlerkorrekturglied 6 ein Modulator 13 vorgesehen, durch welchen die mittels des Fehlerkorrekturglieds 6 eventuell bearbeitete Testsequenz zu einem Hochfrequenzsignal weiterverarbeitet wird. Zu dieser Weiterverarbeitung gehört unter anderem auch das Hochmischen eines Basisbandsignals auf eine Trägerfrequenz, mit der das dann vorliegende Testsignal in der ersten Übertragungsrichtung 3 gesendet wird.

Entsprechend ist auf Seiten des zu prüfenden Geräts 2' ein Demodulator 14 vorgesehen, um aus dem in der ersten Übertragungsrichtung 3 übertragenen Testsignal die ursprünglichen Informationen der in dem Sequenzgenerator 5 erzeugten Testsequenz zurückzugewinnen. Nach der sich anschließenden Fehlerkorrektur in dem zweiten Fehlerkorrekturglied 7 wird das so ausgewertete Testsignal dem Testabschnitt 8 zugeführt. In dem Ausführungsbeispiel der Fig. 2 sind zwei alternative Ausführungsformen für den Testabschnitt 8 dargestellt. Der Testabschnitt 8 umfasst eine erste Variante 8.1 und eine zweite Variante 8.2. Die erste Variante 8.1 und die zweite Variante 8.2 repräsentieren verschiedene Schichten eines OSI-Referenzmodells, auf denen der sogenannte "Test Loop", in dem aus dem ausgewerteten Testsignal die Antwortsequenz erzeugt wird, angeordnet sein kann.

Für ein bestimmtes Übertragungsprotokoll werden diese Möglichkeiten in dem jeweiligen Standard festgelegt. In einem Beispiel für ein UMTS-System wird hierzu der "Layer 1" oder der "RLC (Radio Link Control)-Layer" durch den Standard vorgegeben. Entsprechend den Vorgaben des Standards ist eine Auswahl zwischen den zwei unterschiedlichen Varianten 8.1 und 8.2 des Testabschnitts 8 möglich. Diese Auswahl wird von dem jeweils in Verbindung mit dem zu prüfenden Gerät 2' stehenden Testgerät 1' vorzugsweise beim Verbindungsaufbau festgelegt. Das ausgewertete Testsignal wird gemäß diesen Vorgaben entweder dem "Layer 1" für die erste Variante 8.1 oder dem "RLC-Layer" für die zweite Variante 8.2 zugeführt, so dass von jeweils einer dieser Varianten 8.1 oder 8.2 aus dem ausgewerteten Testsignal eine Antwortsequenz erzeugt wird.

Diese Antwortsequenz durchläuft das dritte Fehlerkorrekturglied 9, wobei die Funktion des Fehlerkorrekturglieds 9 auch transparent geschaltet werden kann, das heißt eine Fehlerkorrektur wird mit den zugeführten Daten der Antwortsequenz nicht durchgeführt.

Durch einen Modulator 15 des zu prüfenden Geräts 2' wird die Antwortsequenz wiederum zu einem sendefähigen Antwortsignal weiterverarbeitet, so dass schließlich von dem zu prüfenden Gerät 2' ein Antwortsignal in der zweiten Übertragungsrichtung 4 zurück an das Testgerät 1' gesendet wird. Das Testgerät 1' ist empfangsseitig mit einem entsprechenden Demodulator 16 ausgerüstet, so dass das empfangene Antwortsignal empfangen und ausgewertet werden kann. Hat eine Fehlerkorrektur auf Seiten des zu prüfenden Geräts 2' stattgefunden, so wird das demodulierte Antwortsignal dem vierten Fehlerkorrekturglied 10 zugeführt bevor das vollständig ausgewertete Antwortsignal schließlich in der Auswerteeinheit 11 mit der ursprünglich generierten Testsequenz bitweise verglichen wird. Aus dem Vergleich der ursprünglich generierten Testsequenz mit dem vollständig ausgewerteten Antwortsignal wird dann durch die Auswerteeinheit 11 beispielsweise eine Bitfehlerrate oder eine Blockfehlerräte ermittelt. Bei der Ermittlung einer Blockfehlerrate wird jeder Block, der mindestens einen Bitfehler enthält als Blockfehler bewertet.

Bei der Anwendung des erfindungsgemäßen Verfahrens zum Beispiel für ein UMTS-System wird durch das Testgerät 1' die Datenrate in der ersten Übertragungsrichtung 3 und in der zweiten Übertragungsrichtung 4 festgelegt. Zudem bestimmt das Testgerät 1' bei dem Verbindungsaufbau, an welcher Position innerhalb des zu prüfenden Geräts 2' der "Test Loop" platziert sein soll, das heißt, ob die erste Variante 8.1 oder die zweite Variante 8.2 des Testabschnitts 8 verwendet werden soll. Bei der eigentlichen Durchführung der Auswertung des Testsignals nach der Übertragung in der ersten Übertragungsrichtung 3 und der sich anschließenden Erzeugung einer Antwortsequenz für den zweiten Datenblock ist das Testgerät 1' unbeteiligt, sondern das zu prüfende Gerät führt eine Routine durch, die in dem jeweiligen Standard definiert ist.

Zur Auswertung des Antwortsignals bzw. der daraus resultierenden Bestimmung einer Fehlerrate wird von dem Testgerät 1' festgelegt, mit welchem Abschnitt der Testsequenz das ausgewertete Antwortsignal im Idealfall identisch sein müsste. Das Testgerät 1' vergleicht hierzu in Abhängigkeit von den zur Übertragung in der ersten Übertragungsrichtung 3 und der zweiten Übertragungsrichtung 4 verwendeten Länge der Datenblöcke das ausgewertete Antwortsignal in voller Länge mit einem entsprechenden Abschnitt der Testsequenz bei Verwendung einer größeren Länge für den ersten Datenblock als für den zweiten Datenblock.

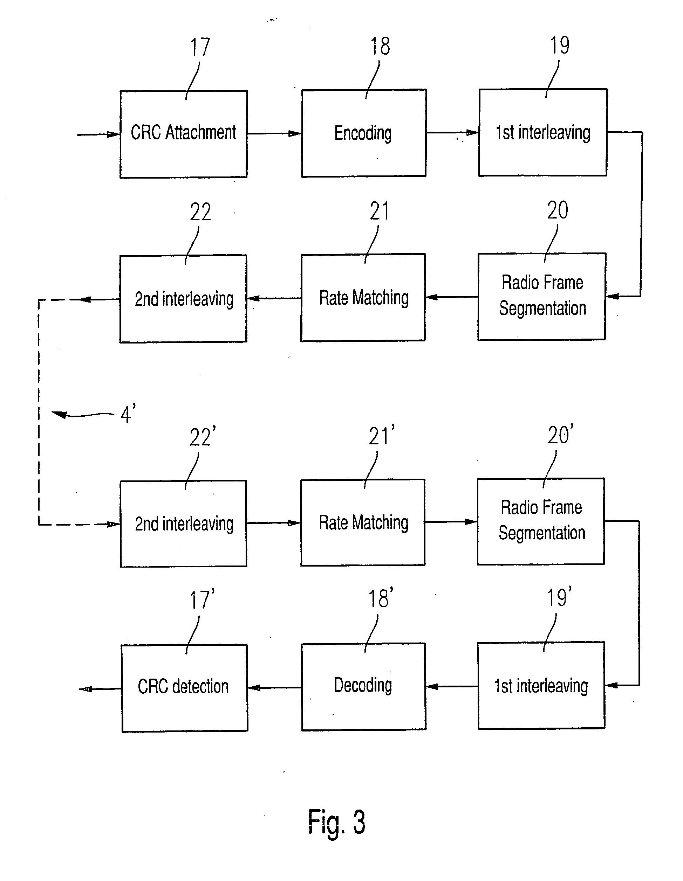

Fig. 3 zeigt stark vereinfacht die einzelnen Schritte bei der Bearbeitung der Datensequenz, welche zur Erzeugung des Antwortsignals dient, durch das dritte Fehlerkorrekturglied 9 bzw. auf Seiten des Testgeräts 1 oder 1' durch das vierte Fehlerkorrekturglied 10. In einem ersten Schritt 17 wird der Antwortsequenz eine Prüfsumme, beispielsweise eine CRC (Cyclic Redundancy Check)-Summe zugefügt. Die so erzeugte, um die Prüfsumme ergänzte Antwortsequenz, wird in einem nächsten Schritt 18 kodiert, beispielsweise durch "Convolutional coding" oder "Turbo coding", wobei die unterschiedlichen verwendbaren Kodierungsalgorithmen durch den verwendeten Übertragungsstandard festgelegt sind.

In einem dritten Schritt 19 wird die kodierte Datensequenz ein erstes Mal verschachtelt, das heißt die Reihenfolge der in der kodierten Datensequenz enthaltenen Informationen nach einem vorgegebenen Schema vertauscht. Anschließend erfolgt in Schritt 20 die Bildung einzelner Datenpakete, wobei die einzelnen Datenpakete entsprechend den Vorgaben von beispielsweise Rahmenstrukturen, die einer bestimmten zeitliche Systematik folgen, gebildet werden. Im Falle eines UMTS-Systems wird in dem nachfolgenden Schritt 21 die Datenrate an den physikalischen Kanal durch Bit-Wiederholung oder Bit-Ausstanzen angepaßt. Der physikalische Kanal wird in der zweiten Übertragungsrichtung 4 in Abhängigkeit der zu übertragenden Datenrate festgelegt. Die danach vorliegende Folge wird noch einmal in einem weiteren Schritt 22 verschachtelt, bevor die Folge einer Spreizung unter Verwendung orthogonaler Spreizcodes unterworfen wird. Nach der Spreizung liegen die zu übertragenden Daten als Chipfolge vor.

Die in dieser Form vorliegenden Daten werden anschließend in bereits beschriebener Weise in der zweiten Übertragungsrichtung 4' gesendet, wobei in der Fig. 3 durch die gestrichelt angedeutete zweite Übertragungsrichtung 4' symbolisiert ist, dass eine weitere Bearbeitung nach der zweiten Verschachtelung in Schritt 22 erfolgt. Die in den Schritten 17 bis 22 mit der Antwortsequenz durchgeführten Bearbeitungen zur Fehlerkorrektur werden durch das vierte Fehlerkorrekturglied 10 in dem Testgerät 1 oder 1' schrittweise wieder aufgehoben, wozu die entsprechenden Bearbeitungsschritte 22' bis 17' dienen, auf deren Beschreibung verzichtet wird, da sie analog zu den Bearbeitungsschritten 17 bis 22 jedoch in umgekehrter Reihenfolge ablaufen.

In Fig. 4 ist eine zweite mögliche Vorgehensweise zur Fehlerkorrektur in dem ersten Fehlerkorrekturglied 6 des Testgeräts 1 bzw. 1' und dem zweiten Fehlerkorrekturglied 7 des zu prüfenden Geräts 2 bzw. 2' dargestellt. Die Schritte 23 und 24 entsprechend den Schritten 17 und 18, wie sie unter Bezugnahme auf Fig. 3 bereits erläutert wurden. Im Anschluss daran findet allerdings in Schritt 25 die Anpassung der Datenrate an den physikalischen Kanal durch Bit-Wiederholung oder Bit-Ausstanzen statt. Die danach vorliegende Folge wird in Schritt 26 verschachtelt. In Schritt 27 wird die Aufteilung des Bitblocks in die entsprechende Rahmenstruktur durchgeführt, die in dem verwendeten Übertragungsstandard spezifiziert ist. Die nun in einzelne Bitpakete des Rahmens aufgeteilte Information wird ein weiteres Mal in Schritt 28 verschachtelt.

Das in dem zu prüfenden Gerät 2 bzw. 2' vorgesehene zweite Fehlerkorrekturglied 7 macht die zur Fehlerkorrektur in dem ersten Fehlerkorrekturglied 6 durchgeführten Schritte 23 bis 28 wiederum analog in den Verfahrensschritten 28' bis 23' rückgängig.

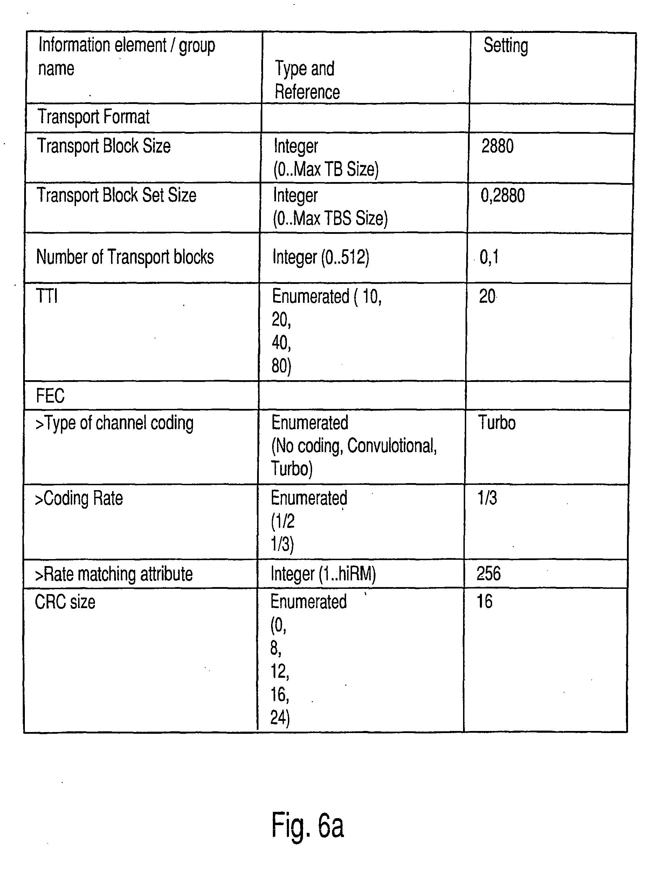

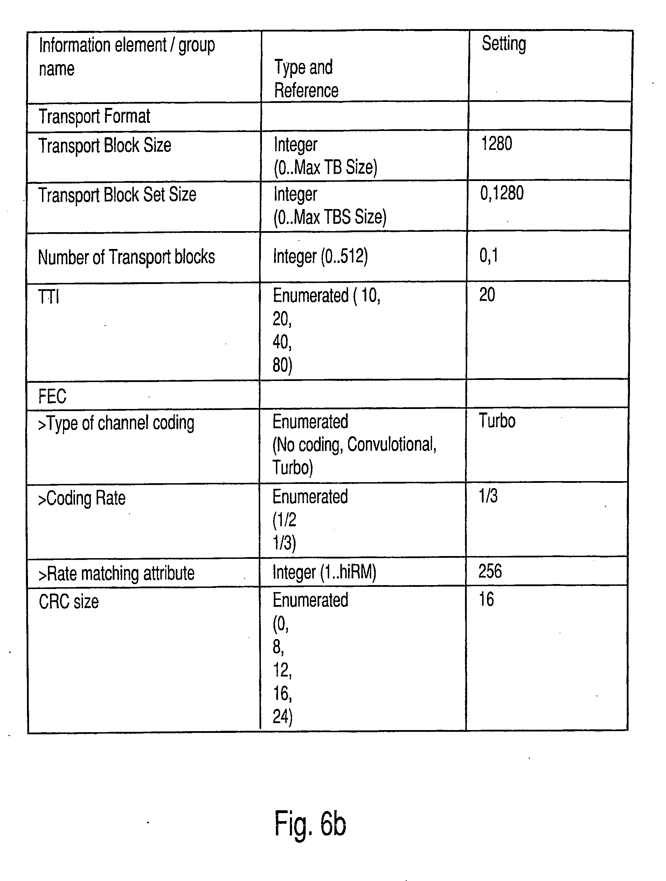

In Fig. 5 ist noch einmal dargestellt, wie von dem zu prüfenden Gerät 2' beispielsweise aus einem ersten Datenblock ein zweiter Datenblock erzeugt wird, der in der Auswerteeinheit 11 des Testgeräts 1' zum Vergleich und damit zur Ermittlung der Fehlerrate herangezogen wird. Für ein Signal des Downlink, also der ersten Übertragungsrichtung 3 des beispielhaft beschriebenen Mobilfunksystems, ist z.B. eine Länge für den ersten Datenblock von 2880 Bit festgelegt, wobei zusätzlich eine Übertragungszeit (TTI, Transport Time Interval) festgelegt wird, innerhalb derer diese Datenmenge übertragen werden muss. Die festgelegten Daten sind in der Tabelle a) der Fig. 6 dargestellt.

Der erste Datenblock weist also eine Gesamtlänge von 2880 Bit auf, die sich in einem ersten Abschnitt 29.1 und einem zweiten Abschnitt 29.2 aufteilen lassen. Die Länge des gesamten ersten Datenblocks 29 ist mit der Länge der in dem Sequenzgenerator 5 erzeugten Testsequenz identisch. Diese Testsequenz wird in bereits beschriebener Weise verarbeitet, wobei unter anderem eine Prüfsumme 30 hinzugefügt wird, bevor das Testsignal in der ersten Übertragungsrichtung 3 an das zu prüfende Gerät gesendet wird.

Wird die Fehlerkorrektur in dem zweiten Fehlerkorrekturglied 7 nicht transparent geschaltet, so erfolgt die Bearbeitung des empfangenen Testsignals unter Berücksichtigung der Prüfsumme 30. Die ursprünglichen Daten der Testsequenz werden dabei von dem zweiten Fehlerkorrekturglied 7 des zu prüfenden Geräts 2 oder 2' teilweise korrigiert, sofern die jeweils fehlende Information z.B. mit Hilfe redundanter Information korrigierbar ist.

Die bei der Auswertung des Testsignals aus dem ersten Abschnitt 29.1 gewonnenen Daten entsprechen den als Antwortsequenz für das Antwortsignal verwendeten Daten und bilden damit den zweiten Datenblock 31. Die Antwortsequenz wird durch das zu prüfende Gerät 2 bzw. 2' gebildet, indem diejenigen Daten, die von dem zu prüfenden Gerät 2 bzw. 2' bei der Auswertung als Inhalt des ersten Abschnitts 29.1 ermittelt werden, die Antwortsequenz bilden. Bei der Auswertung wird der Inhalt des zweiten Abschnitts 29.2 berücksichtigt, indem die gesamte Information des ersten Datenblocks und der Prüfsumme 30 zur Fehlerkorrektur verwendet wird.

Der zweite Datenblock 31 hat beispielsweise entsprechend der von dem Testgerät 1 bzw. 1' festgelegten Datenrate eine Länge von 1280 Bit, die ebenfalls in einer Übertragungszeit von beispielsweise 20 ms übertragen werden müssen. Als Daten für den zweiten Übertragungsblock wird daher lediglich der aus dem Testsignal ermittelte Inhalt des ersten Abschnitts 29.1 verwendet, so dass aus den ausgewerteten Daten u₀ bis u_{K-1} der ursprünglichen Testsequenz die Daten u'₀ bis u'_{K-1} des vollständigen zweiten Datenblocks 31 erzeugt werden. Die Parameter für die zweite Übertragungsrichtung 4 sind in der Tabelle b) der Fig. 6 gezeigt.

Diesen Daten des zweiten Datenblocks 31 wird eine zweite Prüfsumme 32, die redundante Informationen zu der Antwortsequenz enthält, hinzugefügt, bevor der zweite Datenblock 31 zusammen mit der zweiten Prüfsumme 32 in Richtung der zweiten Übertragungsrichtung 4 zurück an das Testgerät 1 bzw. 1' gesendet wird. Dieses Antwortsignal wird daraufhin ausgewertet, wobei durch eine geeignete Testumgebung sicherzustellen ist, dass in Richtung der zweiten Übertragungsrichtung 4 zumindest nahezu keine Übertragungsfehler auftreten. In der Auswerteeinheit 11 des Testgeräts 1 bzw. 1' wird dann bitweise der Inhalt des ausgewerteten Antwortsignals mit dem Inhalt des ersten Abschnitts 29.1 des ersten Datenblocks 29 verglichen.

Zur Erzeugung einer Antwortsequenz aus einem Testsignal, dessen zugrundeliegender erster Datenblock kürzer ist, als der der Antwortsequenz entsprechende zweite Datenblock, können beispielsweise Fülldaten verwendet werden, oder eine bestimmte vordefinierte Bitfolge.

Für jede Abweichung der Daten wird dann ein Bitfehler gezählt, aus dem in Relation zu der insgesamt übertragenen Anzahl von Bits, die Bitfehlerrate ermittelt wird. Zur Ermittlung der Blockfehlerrate gilt jeder Block, in dem ein Bitfehler auftritt, gleichzeitig als Blockfehler.

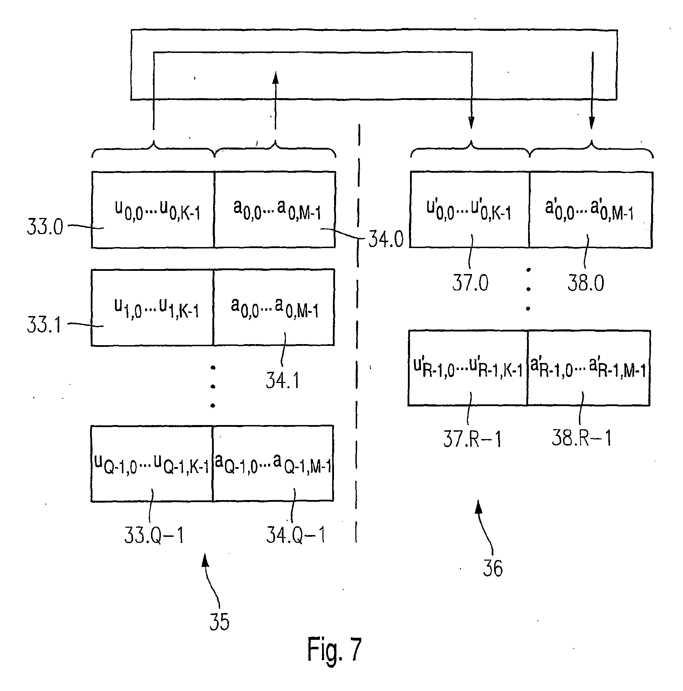

Wie es bereits einleitend ausgeführt wurde, ist für das Erreichen aussagekräftiger Messergebnisse von entscheidender Bedeutung, dass in einem bidirektionalen Kanal für die beiden Übertragungsrichtungen unterschiedliche Datenraten verwendet werden. Neben der Verwendung von Datenblöcken mit einer unterschiedlichen Länge, wie es ausführlich zu der Fig. 5 erläutert ist, kann auch, wie es in der Fig. 7 gezeigt ist, das Testsignal aus einer ersten Gruppe 35 mit mehreren Datenblöcken 33.0 bis 33.Q-1 gebildet werden. Die jeweilige Datenrate wird dann durch die Anzahl der pro Zeiteinheit gesendeten Datenblöcke bestimmt.

Im dargestellten Ausführungsbeispiel wird eine erste Anzahl Q von Datenblöcken 33.0 bis 33.Q-1 verwendet, um eine erste Gruppe 35 zu bilden. Die Datenblöcke 33.0 bis 33.Q-1 weisen dabei alle dieselbe Länge auf. Jedem Datenblock 33.0 bis 33.Q-1 wird eine eigene Prüfsumme 34.0 bis 34.Q-1 zugefügt, um eine Fehlerkorrektur zu ermöglichen.

Aus dieser Gruppe 35 von Datenblöcken 33.0 bis 33.Q-1 wird ein Testsignal gebildet, welches in dem zu prüfenden Gerät 2, 2' ausgewertet wird. Auf Basis des ausgewerteten Testsignals wird dann eine zweite Gruppe 36 mit einer zweiten Anzahl R von Datenblöcken 37.0 bis 37.R-1 gebildet. Den einzelnen Datenblöcken 37.0 bis 37.R-1 der zweiten Gruppe wird ebenfalls jeweils eine Prüfsumme 38.0 bis 38.R-1 zugefügt.

Die Datenblöcke 37.0 bis 37.R-1 der zweiten Gruppe 36 weisen insbesondere dieselbe Länge wie die Datenblöcke 33.0 bis 33.Q-1 der ersten Gruppe 35 auf. Zur Bestimmung einer Fehlerrate werden dann in dem Testgerät 1 bzw. 1' die jeweils sich entsprechenden Datenblöcke 33.0 bis 33.Q-1 und 37.0 bis 37.R-1 der ersten und der zweiten Gruppe 35 und 36 miteinander bitweise verglichen.

Zur Realisierung unterschiedlicher Datenraten in den beiden Übertragungsrichtungen 3 und 4 unterscheiden sich die erste Anzahl Q und die zweite Anzahl R der Datenblöcke 33.0 bis 33.Q-1 der ersten Gruppe 35 und der Datenblöcke 37.0 bis 37.R-1 der zweiten Gruppe 36 voneinander.

Bevorzugt stimmen bei einer fehlerfreien Übertragung sämtlicher Datenblöcke die Datenblöcke derjenigen Gruppe 35 oder 36 mit der niedrigeren Anzahl Q oder R von Datenblöcken 33.0 bis 33.Q-1 oder 37.0 bis 37.R-1 mit den ersten Datenblöcken der anderen Gruppe 36 oder 35 überein. Es können aber auch die Datenblöcke 37.0 bis 37.R-1 so gebildet werden, dass beispielsweise eine Übereinstimmung mit jedem zweiten der Datenblöcke 33.0 bis 33.Q-1 bei einer fehlerfreien Übertragung gegeben ist.

Zusätzlich zu der Anzahl der Datenblöcke 33.0 bis 33.Q-1 und 37.0 bis 37.R-1 in den Gruppen 35 und 36 kann auch die Länge der Datenblöcke 33.0 bis 33.Q-1 der ersten Gruppe 35 sich von der Länge der Datenblöcke 37.0 bis 37.R-1 der zweiten Gruppe 36 unterscheiden, wobei aber vorzugsweise die Länge der Datenblöcke 33.0 bis 33.Q-1 bzw. 37.0 bis 37.R-1 innerhalb einer Gruppe 35 bzw. 36 jeweils identisch ist.

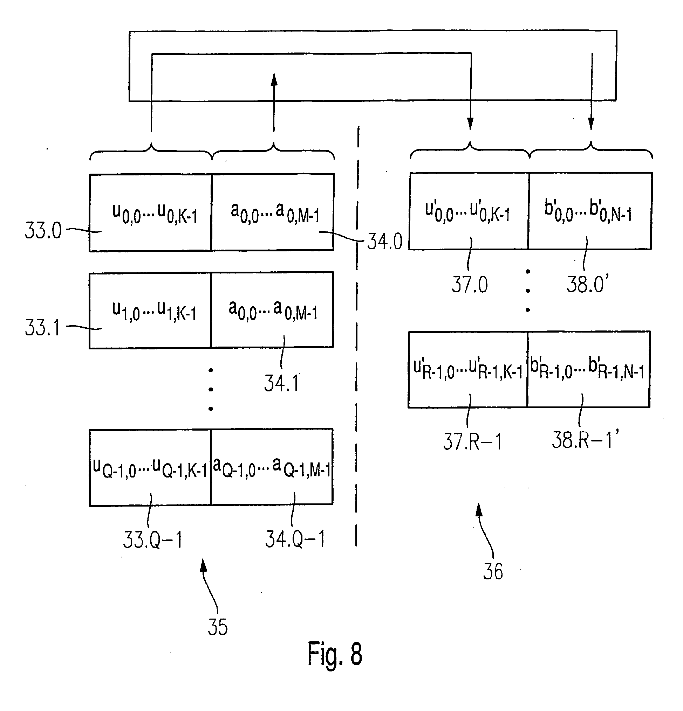

Im Unterschied zu den Prüfsummen 38.0 bis 38.R-1 der Datenblöcke 37.0 bis 37.R-1 der zweiten Gruppe 36, die mit dem Format der Prüfsummen 34.0 bis 34.Q-1 der Datenblöcke 33.0 bis 33.Q-1 der ersten Gruppe 35 übereinstimmen, wie es in der Fig. 7 dargestellt ist, ist in der Fig. 8 ein Ausführungsbeispiel gezeigt, bei dem für die Datenblöcke 37.0 bis 37.R-1 einer zweiten Gruppe 36 Prüfsummen 38.0' bis 38.R-1' verwendet werden, die sich im Format von den Prüfsummen 34.0 bis 34.Q-1 der Datenblöcke 33.0 bis 33.Q-1 der ersten Gruppe 35 unterscheiden. Auf eine erneute Beschreibung der übereinstimmenden Elemente der Ausführungsbeispiele der Fig. 7 und 8 wird, um Wiederholungen zu vermeiden, verzichtet.

Die Ausführungsbeispiele sind für den Fall dargestellt, dass die erste Anzahl Q von Datenblöcken 33.0 bis 33.Q-1 der ersten Gruppe 35 größer ist als die zweite Anzahl R der Datenblöcke 37.0 bis 37.R-1 der zweiten Gruppe 36. Dies entspricht der Annahme einer größeren Datenrate in der ersten Übertragungsrichtung 3. Ebenso wie bei der Verwendung unterschiedlicher Längen für die Datenblöcke zur Realisierung unterschiedlicher Datenraten kann auch die Datenrate in der zweiten Übertragungsrichtung 4 größer sein. Im entsprechenden Fall ist die zweite Anzahl R größer als die erste Anzahl Q.

Durch das zu prüfende Gerät 2, 2' wird dann die zusätzliche Anzahl von Datenblöcken 37.0 bis 37.R-1 mit einem vorgegebenen Dateninhalt gefüllt.

Die Erfindung auf die dargestellten Ausführungsbeispiele beschränkt, sondern umfasst auch die Kombination einzelner Merkmale unterschiedlicher Ausführungsbeispiele.

## Patentansprüche

1. Verfahren zum Ermitteln einer Fehlerrate bei einer bidirektionalen Datenübertragung zwischen einem Testgerät und einem zu prüfenden Gerät (2, 2'), aufweisend die folgenden Schritte:
- Erzeugen eines ersten Datenblocks (29) einer ersten Länge durch ein Testgerät (1, 1'),
- Senden eines aus einem ersten Datenblock (29) erzeugten Testsignals durch das Testgerät (1, 1') mit einer ersten Datenrate,
- Empfangen und Auswerten des Testsignals durch das zu prüfende Gerät (2, 2'),
- Erzeugen eines zweiten Datenblocks (31) einer Länge, die sich von der des ersten Datenblocks (29) unterscheidet, aus dem ausgewerteten Testsignal,
- Zurücksenden eines aus dem zweiten Datenblock (31) erzeugten Antwortsignals durch das zu prüfende Gerät (2, 2') mit einer zweiten, von der ersten Datenrate verschiedenen Datenrate,
- Empfangen und Auswerten des Antwortsignals durch das Testgerät,
- Ermitteln einer Fehlerrate durch Vergleich der Inhalte des ausgewerteten Antwortsignals und eines entsprechenden Teilabschnitts (29.1) des ersten Datenblocks (29) bei einem im Vergleich zum zweiten Datenblock längeren ersten Datenblock oder durch Vergleich der Inhalte des ersten Datenblocks (29) und eines entsprechenden Teilabschnitts des ausgewerteten Antwortsignals bei einem im Vergleich zum ersten Datenblock längerem zweiten Datenblock,
**dadurch gekennzeichnet,**
**dass** dem ersten Datenblock (29) eine Prüfsumme (30) hinzugefügt wird und das Auswerten des Testsignals durch das zu prüfende Gerät (2, 2') die Durchführung einer Fehlerkorrektur umfasst und dass das Erzeugen des zweiten Datenblocks (31) auf Basis des fehlerkorrigierten, ausgewerteten Testsignals erfolgt.

2. Verfahren nach Anspruch 1,
**dadurch gekennzeichnet,**
**dass** bei Verwendung eines längeren ersten Datenblocks (29) in der ersten Übertragungsrichtung (3) der Inhalt eines ersten Abschnitts (29.1) des ausgewerteten Testsignals als kürzerer zweiter Datenblock (31) verwendet wird.

3. Verfahren nach Anspruch 1,
**dadurch gekennzeichnet,**
**dass** bei Verwendung eines längeren zweiten Datenblocks (31) in der zweiten Übertragungsrichtung (4) zur Erzeugung des zweiten Datenblocks (31) zusätzlich zu dem Inhalt des ausgewerteten ersten Datenblocks (29) Fülldaten verwendet werden.

4. Verfahren nach einem der Ansprüche 1 bis 3,
**dadurch gekennzeichnet,**
**dass** von der Sende-/Empfangseinrichtung des Testgeräts (1, 1') bestimmt wird, auf welcher Ebene eines OSI-Referenzmodells in dem zu prüfenden Gerät (2, 2') aus dem ausgewerteten Testsignal der zweite Datenblock (31) erzeugt wird.

5. Verfahren nach einem der Ansprüche 1 bis 4,
**dadurch gekennzeichnet,**
**dass** die Länge der jeweiligen Datenblöcke (29, 31) für die erste Übertragungsrichtung (3) und für die zweite Übertragungsrichtung (4) beim Verbindungsaufbau durch das Testgerät (1, 1') festgelegt wird.

6. Verfahren zum Ermitteln einer Fehlerrate bei einer bidirektionalen Datenübertragung zwischen einem Testgerät und einem zu prüfenden Gerät (2, 2'), aufweisend die folgenden Schritte :
- Erzeugen einer ersten Gruppe (35) mit einer ersten Anzahl (Q) von Datenblöcken (33.0,..., 33. Q-1) durch ein Testgerät (1, 1'),
- Senden eines aus der ersten Gruppe (35) von Datenblöcken (33.0,..., 33. Q-1) erzeugten Testsignals durch das Testgerät (1, 1') mit einer ersten Datenrate,
- Empfangen und Auswerten des Testsignals durch das zu prüfende Gerät (2, 2'),
- Erzeugen einer zweiten Gruppe (36) mit einer zweiten Anzahl (R) von Datenblöcken (37.0,... 37. R-1) aus dem ausgewerteten Testsignal, wobei sich die zweite Anzahl (R) von der ersten Anzahl (Q) von Datenblöcken (33. 0,..., 33. Q-1) der ersten Gruppe (35) unterscheiden
- Zurücksenden eines aus der zweiten Gruppe (36)-von Datenblöcken (37.0,..., 37. R-1) erzeugten Antwortsignals durch das zu prüfende Gerät (2, 2') mit einer zweiten, von der ersten Datenrate verschiedenen Datenrate,
- Empfangen und Auswerten des Antwortsignals durch das Testgerät,
- Ermitteln einer Fehlerrate durch Vergleich der Inhalte des ausgewerteten Antwortsignals und entsprechender Datenblöcke (33.0,..., 33. Q-1) der ersten Gruppe (35) bei einer im Vergleich zur zweiten Anzahl (R) der zweiten Gruppe (36) grösseren ersten Anzahl (Q) oder durch Vergleich der Inhalte der ersten Gruppe (35) von Datenblöcken (33. 0,..., 33. Q-1) und entsprechender Datenblöcke (37.0,..., 37. R-1) der zweiten Gruppe (36) des ausgewerteten Antwortsignals bei einer im Vergleich zur ersten Anzahl (Q) der ersten Gruppe (35) grösseren zweiten Anzahl (R),
**dadurch gekennzeichnet,**
**dass** jedem Datenblock (33.0,..., 33. Q-1) der ersten Gruppe (35) eine eigene Prüfsumme (34.0,..., 34. Q-1) zugefügt wird und das Auswerten des Testsignals durch das zu prüfende Gerät (2, 2') die Durchführung einer Fehlerkorrektur umfasst und dass das Erzeugen der zweiten Gruppe (36) von Datenblöcken (37.0,..., 37. Q-1) auf Basis des fehlerkorrigierten, ausgewerteten Testsignals erfolgt.

7. Verfahren nach Anspruch 6,
**dadurch gekennzeichnet,**
**dass** bei Verwendung einer grösseren ersten Anzahl (Q) in der ersten Übertragungsrichtung (3) der Inhalt der ersten Datenblöcke (33. 0,..., 33. Q-l) der ersten Gruppe (35) des ausgewerteten Testsignals als Datenblöcke (37.0,..., 37. R- 1) der zweite Gruppe (36) verwendet wird.

8. Verfahren nach Anspruch 6,
**dadurch gekennzeichnet,**
**dass** bei Verwendung einer grösseren zweiten Anzahl (R) von Datenblöcken (37.0,..., 37. R-1) in der zweiten Übertragungsrichtung (4) zur Erzeugung der Datenblöcke (37.0,..., 37. R-1) der zweiten Gruppe (36) zusätzlich zu dem Inhalt der ausgewerteten ersten Gruppe (35) von Datenblöcken (33.0,..., 33. Q-1) Fülldaten verwendet werden.

9. Verfahren nach einem der Ansprüche 6 bis 8,
**dadurch gekennzeichnet,**
**dass** von der Sende-/Empfangseinrichtung des Testgeräts (1, 1') bestimmt wird, auf welcher Ebene eines OSI-Referenzmodells in dem zu prüfenden Gerät (2, 2') aus dem ausgewerteten Testsignal die zweite Gruppe (36) von Datenblöcken (37.0,..., 37. R-1) erzeugt wird.

10. Verfahren nach einem der Ansprüche 6 bis 9,
**dadurch gekennzeichnet,**
**dass** die erste und die zweite Anzahl (Q, R) von Datenblöcken (33. 0,..., 33. Q-1 ; 37. 0,..., 37. R-1) der ersten und der zweiten Gruppe (35, 36) für die erste Übertragungsrichtung (3) und für die zweite Übertragungsrichtung (4) beim Verbindungsaufbau durch das Testgerät (1, 1') festgelegt wird.

11. Verfahren nach einem der Ansprüche 6 bis 10,
**dadurch gekennzeichnet,**
**dass** zumindest in einer Übertragungsrichtung (3, 4) die Anzahl (Q, R) der Datenblöcke (33.0,..., 33. Q-1 ; 37. 0,..., 37. R-1) einer Gruppe (35,36) maximal ist.

12. Verfahren nach einem der Ansprüche 1 bis 11,
**dadurch gekennzeichnet,**
**dass** zumindest in einer Übertragungsrichtung (3, 4) Datenblöcke (29,31, 33. 0,..., 33. Q-1 ; 37. 0,..., 37. R-1) maximal möglicher Länge verwendet werden.

13. Verfahren nach einem der Ansprüche 1 bis 12,
**dadurch gekennzeichnet,**
**dass** das Testsignal und das Antwortsignal Basisbandsignale sind.

14. Testgerät zum Ermitteln einer Fehlerrate einer Empfangseinrichtung von in einer ersten Übertragungsrichtung (3) zu einem zu prüfenden Gerät (2, 2') hin übertragenen Daten mit einem Sequenzgenerator (5) zum Erzeugen einer ersten Gruppe (35) mit einer ersten Anzahl (Q) von Datenblöcken (33.0,..., 33. Q-1) und einer Sende-/Empfangseinrichtung zum Senden eines aus der ersten Gruppe (35) von Datenblöcken (33.0,..., 33. Q-1) erzeugten Testsignals und zum Empfangen und Auswerten eines in einer zweiten Übertragungsrichtung (4) von dem zu prüfenden Gerät (2,2') auf Basis einer zweiten Gruppe (36) mit einer zweiten Anzahl (R), von Datenblöcken (37.0,..., 37. R- 1) gesendeten Antwortsignals, wobei sich die zweite Anzahl (R) von der ersten Anzahl (Q) unterscheidet und einer Auswerteeinheit (11) zum Ermitteln einer Fehlerrate der Inhalte der beiden Gruppen (35,36) von Datenblöcken (33. 0,..., 33. Q-1 ; 37. 0,..., 37. R-1), wobei durch die Auswerteeinheit (11) zur Ermittlung der Fehlerrate der Inhalt der Datenblöcke (33.0,..., 33. Q-1 ; 37.0,..., 37. R- 1) der ersten oder zweiten Gruppe (35,36) mit der jeweils kleineren Anzahl (Q, R) von Datenblöcken (33.0,..., 33. Q- 1; 37.0,..., 37. R-1) mit den entsprechenden Datenblöcken (37.0,..., 37. R-1 ; 33.0,..., 33. Q-1) der zweiten oder der ersten Gruppe (36,35) mit der grösseren Anzahl (R, Q) von Datenblöcken (37.0,..., 37. R-1 ; 33.0,..., 33. Q-1) vergleichbar ist,
**dadurch gekennzeichnet,**
**dass** mit dem Sequenzgenerator (5) ein Fehlerkorrekturglied (6) verbunden ist, das so eingerichtet ist, dass jedem Datenblock (33.0,..., 33. Q-1) eine Prüfsumme (34.0,..., 34. Q-1) zugefügt wird.

15. Testgerät nach Anspruch 14,
**dadurch gekennzeichnet;**
**dass** durch das Testgerät (1, 1') bestimmbar ist, auf welcher Ebene eines OSI-Referenzmodells von dem zu prüfenden Gerät (2, 2') aus dem ausgewerteten Testsignal die zweite Gruppe (36) von Datenblöcken (37. 0,..., 37. R-1) erzeugt wird.

16. Testgerät nach Anspruch 14 oder 15,
**dadurch gekennzeichnet,**
**dass** die erste und/oder zweite Anzahl (Q, R) der jeweiligen Gruppe (35,36) von Datenblöcken (33. 0,..., 33. Q-1 ; 37.0,..., 37. R-1) für die erste Übertragungsrichtung (3) und die zweite Übertragungsrichtung (4) beim Verbindungsaufbau durch das Testgerät (1, 1') festlegbar ist.

17. Testgerät nach einem der Ansprüche 14 bis 16,
**dadurch gekennzeichnet,**
**dass** zumindest in einer Übertragungsrichtung (3, 4) die Anzahl (Q, R) der Datenblöcke (33.0,..., 33. Q-1; 37. 0,..., 37. R-1) einer Gruppe (35,36) maximal ist.

18. Testgerät nach einem der Ansprüche 14 bis 17,
**dadurch gekennzeichnet,**
**dass** zumindest für eine Übertragungsrichtung (3, 4) Datenblöcke (33.0,..., 33. Q-1 ; 37.0,..., 37. R-1) maximal möglicher Länge verwendbar sind.

19. Testgerät nach einem der Ansprüche 14 bis 18,
**dadurch gekennzeichnet,**
**dass** das Testsignal und/oder das Antwortsignal Basisbandsignale sind.

## Claims

1. Method for ascertaining an error rate for a bidirectional data transmission between a tester and an appliance to be tested (2, 2'), having the following steps:
- a first data block (29) of a first length is produced by a tester (1, 1'),
- a test signal produced from a first data block (29) is sent by the tester (1, 1') at a first data rate,
- the test signal is received and evaluated by the appliance to be tested (2, 2'),
- a second data block (31) of a length which differs from that of the first data block (29) is produced from the evaluated test signal,
- a response signal produced from the second data block (31) is returned by the appliance to be tested (2, 2') at a second data rate, which is different from the first data rate,
- the response signal is received and evaluated by the tester,
- an error rate is ascertained by comparing the contents of the evaluated response signal and an appropriate subsection (29.1) of the first data block (29) if the first data block is longer in comparison with the second data block, or by comparing the contents of the first data block (29) and an appropriate subsection of the evaluated response signal if the second data block is longer in comparison with the first data block,
**characterized in that**
the first data block (29) has a checksum (30) added to it and the evaluation of the test signal by the appliance to be tested (2, 2') comprises the performance of an error correction and **in that** the second data block (31) is produced on the basis of the error-corrected, evaluated test signal.

2. Method according to Claim 1,
**characterized in that**
when a longer first data block (29) is used, the content of the first section (29.1) of the evaluated test signal is used as the shorter second data block (31) in the first transmission direction (3).

3. Method according to Claim 1,
**characterized in that**
when a longer second data block (31) is used, filler data are used in the second transmission direction (4) for producing the second data block (31) in addition to the content of the evaluated first data block (29).

4. Method according to one of Claims 1 to 3,
**characterized in that**
the transmission/reception device of the tester (1, 1') determines at what level of an OSI reference model the second data block (31) is produced in the appliance to be tested (2, 2') from the evaluated test signal.

5. Method according to one of Claims 1 to 4,
**characterized in that**
the length of the respective data blocks (29, 31) is stipulated by the tester (1, 1') for the first transmission direction (3) and for the second transmission direction (4) during connection setup.

6. Method for ascertaining an error rate for a bidirectional data transmission between a tester and an appliance to be tested (2, 2'), having the following steps:
- a first group (35) with a first number (Q) of data blocks (33.0, ..., 33. Q-1) is produced by a tester (1, 1'),
- a test signal produced from the first group (35) of data blocks (33.0, ..., 33. Q-1) is sent by the tester (1, 1') at a first data rate,
- the test signal is received and evaluated by the appliance to be tested (2, 2'),
- a second group (36) with a second number (R) of data blocks (37.0, ..., 37. R-1) is produced from an evaluated test signal, wherein the second number (R) differs from the first number (Q) of data blocks (33.0, ..., 33. Q-1) in the first group (35),
- a response signal produced from the second group (36) of data blocks (37.0, ..., 37. R-1) is returned by the appliance to be tested (2, 2') at a second data rate, which is different from the first data rate,
- the response signal is received and evaluated by the tester,
- an error rate is ascertained by comparing the contents of the evaluated response signal and appropriate data blocks (33.0, ..., 33. Q-1) in the first group (35) if the first number (Q) is greater in comparison with the second number (R) of the second group (36), or by comparing the contents of the first group (35) of data blocks (33.0, ..., 33. Q-1) and appropriate data blocks (37.0, ..., 37. R-1) in the second group (36) of the evaluated response signal if the second number (R) is greater in comparison with the first number (Q) of the first group (35),
**characterized in that**
each data block (33.0, .., 33. Q-1) in the first group (35) has a dedicated checksum (34.0, ..., 34. Q-1) added to it, and the evaluation of the test signal by the appliance to be tested (2, 2') comprises the performance of an error correction, and **in that** the second group (36) of data blocks (37.0, .., 37. Q-1) is produced on the basis of the error-corrected, evaluated test signal.

7. Method according to Claim 6,
**characterized in that**
when a larger first number (Q) is used, the content of the first data blocks (33.0, ..., 33. Q-1) in the first group (35) of the evaluated test signal is used as data blocks (37.0, ..., 37. R-1) in the second group (36) in the first transmission direction (3).

8. Method according to Claim 6,
**characterized in that**
when a larger second number (R) of data blocks (37.0, ..., 37. R-1) is used, filler data are used in the second transmission direction (4) for producing the data blocks (37.0, ..., 37. R-1) in the second group (36) in addition to the content of the evaluated first group (35) of data blocks (33.0, ..., 33. Q-1).

9. Method according to one of Claims 6 to 8,
**characterized in that**
the transmission/reception device of the tester (1, 1') determines at what level of an OSI reference model the second group (36) of data blocks (37.0, ..., 37. R-1) is produced in the appliance to be tested (2, 2') from the evaluated test signal.

10. Method according to one of Claims 6 to 9,
**characterized in that**
the first and second numbers (Q, R) of data blocks (33.0, ..., 33. Q-1; 37.0, ..., 37. R-1) in the first and second groups (35, 36) are stipulated by the tester (1, 1') for the first transmission direction (3) and for the second transmission direction (4) during connection setup.

11. Method according to one of Claims 6 to 10,
**characterized in that**
the number (Q, R) of data blocks (33.0, ..., 33. Q-1; 37.0, ..., 37. R-1) in a group (35, 36) is at a maximum at least in one transmission direction (3, 4).

12. Method according to one of Claims 1 to 11,
**characterized in that**
data blocks (29, 31, 33.0, ..., 33. Q-1; 37.0, ..., 37. R-1) of maximum possible length are used at least in one transmission direction (3, 4).

13. Method according to one of Claims 1 to 12,
**characterized in that**
the test signal and the response signal are baseband signals.

14. Tester for ascertaining an error rate for a reception direction for data transmitted in a first transmission direction (3) to an appliance to be tested (2, 2') having a sequence generator (5) for producing a first group (35) with a first number (Q) of data blocks (33.0, ..., 33. Q-1) and having a transmission/reception device for sending a test signal produced from a first group (35) of data blocks (33.0, ..., 33. Q-1) and for receiving and evaluating a response signal sent in a second transmission direction (4) from the appliance to be tested (2, 2') on the basis of a second group (36) with a second number (R) of data blocks (37.0, ..., 37. R-1), wherein the second number (R) differs from the first number (Q), and having an evaluation unit (11) for ascertaining an error rate for the contents of the two groups (35, 36) of data blocks (33.0, ..., 33. Q-1; 37.0, ..., 37. R-1), wherein the evaluation unit (11) can ascertain the error rate by comparing the content of the data blocks (33.0, ..., 33. Q-1; 37.0, ..., 37. R-1) in the first or second group (35, 36) with the respective smaller number (Q, R) of data blocks (33.0, ..., 33. Q-1; 37.0, ..., 37. R-1) with the appropriate data blocks (37.0, ..., 37. R-1; 33.0, ..., 33. Q-1) in the second or the first group (36, 35) with the larger number (R, Q) of data blocks (37.0, ..., 37. R-1; 33.0, ..., 33. Q-1),
**characterized in that**
the sequence generator (5) has an error correction element (6) connected to it which is set up such that each data block (33.0, ..., 33. Q-1) has a checksum (34.0, ..., 34. Q-1) added to it.

15. Tester according to Claim 14,
**characterized in that**
the tester (1, 1') can determine at what level of an OSI reference model the appliance to be tested (2, 2') produces the second group (36) of data blocks (37.0, ..., 37. R-1) from the evaluated test signal.

16. Tester according to Claim 14 or 15,
**characterized in that**
the first and/or second number (Q, R) of the respective group (35, 36) of data blocks (33.0, ..., 33. Q-1; 37.0, ..., 37. R-1) can be stipulated by the tester (1, 1') for the first transmission direction (3) and the second transmission direction (4) during connection setup.

17. Tester according to one of Claims 14 to 16,
**characterized in that**
the number (Q, R) of data blocks (33.0, ..., 33. Q-1; 37.0, ..., 37. R-1) in a group (35, 36) is at a maximum at least in one transmission direction (3, 4).

18. Tester according to one of Claims 14 to 17,
**characterized in that**
data blocks (33.0, ..., 33. Q-1; 37.0, ..., 37. R-1) of maximum possible length can be used at least for one transmission direction (3, 4).

19. Tester according to one of Claims 14 to 18,
**characterized in that**
the test signal and/or the response signal are baseband signals.

## Revendications

1. Procédé de détermination d'un taux d'erreur lors d'une transmission de données bidirectionnelle entre un appareil testeur et un appareil à vérifier (2, 2'), présentant les étapes suivantes consistant à:
- générer par un appareil testeur (1, 1') un premier bloc de données (29) d'une première longueur,
- envoyer par l'appareil testeur (1, 1') à un premier débit de données un signal de test généré à partir d'un premier bloc de données (29),
- recevoir et évaluer le signal de test par l'appareil à vérifier (2, 2'),
- générer à partir du signal de test évalué un deuxième bloc de données (31) d'une longueur différente de celle du premier bloc de données (29),
- renvoyer par l'appareil à vérifier (2, 2'), à un deuxième débit de données différent du premier débit de données, un signal de réponse généré à partir du deuxième bloc de données (31),
- recevoir et évaluer le signal de réponse par l'appareil testeur,
- déterminer un taux d'erreur en comparant les contenus du signal de réponse évalué et d'une portion partielle correspondante (29.1) du premier bloc de données (29) dans le cas d'un premier bloc de données plus long en comparaison avec le deuxième bloc de données, ou en comparant les contenus du premier bloc de données (29) et d'une portion partielle correspondante du signal de réponse évalué dans le cas d'un deuxième bloc de données plus long en comparaison avec le premier bloc de données,
**caractérisé en ce qu'**une somme de contrôle (30) est ajoutée au premier bloc de données (29) et l'évaluation du signal de test par l'appareil à vérifier (2, 2') comprend l'exécution d'une correction d'erreur, et **en ce que** la génération du deuxième bloc de données (31) s'effectue sur la base du signal de test dont les erreurs ont été corrigées.

2. Procédé selon la revendication 1, **caractérisé en ce que** lors de l'utilisation d'un premier bloc de données (29) plus long dans le premier sens de transmission (3), le contenu d'une première portion (29.1) du signal de test évalué est utilisé en tant que deuxième bloc de données (31) plus court.

3. Procédé selon la revendication 1, **caractérisé en ce que** lors de l'utilisation d'un deuxième bloc de données (31) plus long dans le deuxième sens de transmission (4) pour générer le deuxième bloc de données (31), des données de remplissage sont utilisées en plus du contenu du premier bloc de données (29) évalué.

4. Procédé selon l'une quelconque des revendications 1 à 3, **caractérisé en ce que** le dispositif d'émission/réception de l'appareil testeur (1, 1') détermine dans quelle couche d'un modèle de référence OSI dans l'appareil à vérifier (2, 2') le deuxième bloc de données (31) est généré à partir du signal de test évalué.

5. Procédé selon l'une quelconque des revendications 1 à 4, **caractérisé en ce que** la longueur des blocs de données respectifs (29, 31) est fixée pour le premier sens de transmission (3) et pour le deuxième sens de transmission (4) lors de l'établissement d'une communication par l'appareil testeur (1, 1').

6. Procédé de détermination d'un taux d'erreur lors d'une transmission de données bidirectionnelle entre un appareil testeur et un appareil à vérifier (2, 2'), présentant les étapes suivantes consistant à:
- générer par un appareil testeur (1, 1') un premier groupe (35) avec un premier nombre (Q) de blocs de données (33.0, ..., 33. Q-1),
- envoyer par l'appareil testeur (1, 1') à un premier débit de données un signal de test généré à partir du premier groupe de blocs de données (33.0, ..., 33. Q-1),
- recevoir et évaluer le signal de test par l'appareil à vérifier (2, 2'),
- générer un deuxième groupe (36) avec un deuxième nombre (R) de blocs de données (37.0, ..., 37. R-1) à partir du signal de test évalué, le deuxième nombre (R) étant différent du premier nombre (Q) de blocs de données (33.0, ..., 33. Q-1) du premier groupe (35),
- renvoyer par l'appareil à vérifier (2, 2'), à un deuxième débit de données différent du premier débit de données, un signal de réponse généré à partir du deuxième groupe (36) de blocs de données (37.0, ..., 37. R-1)
- recevoir et évaluer le signal de réponse par l'appareil testeur,
- déterminer un taux d'erreur en comparant les contenus du signal de réponse évalué et de blocs de données correspondants (33.0, ..., 33. Q-1) du premier groupe (35) dans le cas d'un premier nombre (Q) supérieur en comparaison avec le deuxième nombre (R) du deuxième groupe (36), ou en comparant les contenus du premier groupe (35) de blocs de données (33.0, ..., 33. Q-1) et de blocs de données correspondants (37.0, ..., 37. R-1) du deuxième groupe (36) du signal de réponse évalué dans le cas d'un deuxième nombre (R) supérieur en comparaison avec le premier nombre (Q) du premier groupe (35),
**caractérisé en ce qu'**une somme de contrôle propre (34.0, ..., 34. Q-1) est ajoutée à chaque bloc de données (33.0, ..., 33. Q-1) du premier groupe (35) et l'évaluation du signal de test par l'appareil à vérifier (2, 2') comprend l'exécution d'une correction d'erreur, et **en ce que** la génération du deuxième groupe (36) de blocs de données (37.0, ..., 37. Q-1) s'effectue sur la base du signal de test dont les erreurs ont été corrigées.

7. Procédé selon la revendication 6, **caractérisé en ce que** lors de l'utilisation d'un premier nombre (Q) supérieur dans le premier sens de transmission (3), le contenu des premiers blocs de données (33.0, ..., 33. Q-1) du premier groupe (35) du signal de test évalué est utilisé en tant que blocs de données (37.0, ..., 37. R-1) du deuxième groupe (36).

8. Procédé selon la revendication 6, **caractérisé en ce que** lors de l'utilisation d'un deuxième nombre (R) supérieur de blocs de données (37.0, ..., 37. R-1) dans le deuxième sens de transmission (4), des données de remplissage sont utilisées en plus du contenu du premier groupe (35) évalué de blocs de données (33.0, ..., 33. Q-1) pour générer les blocs de données (37.0, ..., 37. R-1) du deuxième groupe (36).

9. Procédé selon l'une quelconque des revendications 6 à 8, **caractérisé en ce que** le dispositif d'émission/réception de l'appareil testeur (1, 1') détermine dans quelle couche d'un modèle de référence OSI dans l'appareil à vérifier (2, 2') le deuxième groupe (36) de blocs de données (37.0, ..., 37. R-1) est généré à partir du signal de test évalué.

10. Procédé selon l'une quelconque des revendications 6 à 9, **caractérisé en ce que** le premier et le deuxième nombre (Q, R) de blocs de données (33.0, ..., 33. Q-1; 37.0, ..., 37. R-1) du premier et du deuxième groupe (35, 36) est fixé pour le premier sens de transmission (3) et pour le deuxième sens de transmission (4) lors de l'établissement d'une communication par l'appareil testeur (1, 1').

11. Procédé selon l'une quelconque des revendications 6 à 10, **caractérisé en ce qu'**au moins dans un sens de transmission (3, 4) le nombre (Q, R) des blocs de données (33.0, ..., 33. Q-1; 37.0, ..., 37. R-1) d'un groupe (35, 36) est maximal.

12. Procédé selon l'une quelconque des revendications 1 à 11, **caractérisé en ce qu'**au moins dans un sens de transmission (3, 4) des blocs de données (29, 31, 33.0, ..., 33. Q-1; 37.0, ..., 37. R-1) de longueur maximale possible sont utilisés.

13. Procédé selon l'une quelconque des revendications 1 à 12, **caractérisé en ce que** le signal de test et le signal de réponse sont des signaux de bande de base.

14. Appareil testeur pour déterminer un taux d'erreur d'un dispositif de réception de données transmises dans un premier sens de transmission (3) à un appareil à vérifier (2, 2'), avec un générateur de séquence (5) pour générer un premier groupe (35) ayant un premier nombre (Q) de blocs de données (33.0, ..., 33. Q-1), et un dispositif d'émission/réception pour envoyer un signal de test généré à partir du premier groupe (35) de blocs de données (33.0, ..., 33. Q-1) et pour recevoir et évaluer un signal de réponse envoyé dans un deuxième sens de transmission (4) par l'appareil à vérifier (2, 2') sur la base d'un deuxième groupe (36) ayant un deuxième nombre (R) de blocs de données (37.0, ..., 37. R-1), le deuxième nombre (R) étant différent du premier nombre (Q), et une unité d'évaluation (11) pour déterminer un taux d'erreur des contenus des deux groupes (35, 36) de blocs de données (33.0, ..., 33. Q-1; 37.0, ..., 37. R-1), dans lequel l'unité d'évaluation (11), pour déterminer le taux d'erreur, permet de comparer les contenus des blocs de données (33.0, ..., 33. Q-1; 37.0, ..., 37. R-1) du premier ou deuxième groupe (35, 36) ayant le nombre (Q, R) respectivement inférieur de blocs de données (33.0, ..., 33. Q-1; 37.0, ..., 37. R-1) aux blocs de données correspondants (37.0, ..., 37. R-1; 33.0, ..., 33. Q-1) du deuxième ou du premier groupe (36, 35) ayant le nombre (R, Q) supérieur de blocs de données (37.0, ..., 37. R-1; 33.0,..., 33. Q-1),
**caractérisé en ce qu'**un élément de correction d'erreur (6) est relié au générateur de séquence, ledit élément étant aménagé de telle sorte qu'une somme de contrôle (34.0, ..., 34. Q-1) est ajoutée à chaque bloc de données (33.0, ..., 33. Q-1).

15. Appareil testeur selon la revendication 14, **caractérisé en ce que** l'appareil testeur (1, 1') permet de déterminer dans quelle couche d'un modèle de référence OSI le deuxième groupe (36) de blocs de données (37.0, ..., 37. R-1) est généré par l'appareil à vérifier (2, 2') à partir du signal de test évalué.

16. Appareil testeur selon la revendication 14 ou 15, **caractérisé en ce que** le premier et/ou le deuxième nombre (Q, R) du groupe respectif (35, 36) de blocs de données (33.0, ..., 33. Q-1; 37.0, ..., 37. R-1) peut être fixé pour le premier sens de transmission (3) et le deuxième sens de transmission (4) lors de l'établissement de communication par l'appareil testeur (1, 1').

17. Appareil testeur selon l'une quelconque des revendications 14 à 16, **caractérisé en ce qu'**au moins dans un sens de transmission (3, 4), le nombre (Q, R) des blocs de données (33.0, ..., 33. Q-1; 37.0, ..., 37. R-1) d'un groupe (35, 36) est maximal.

18. Appareil testeur selon l'une quelconque des revendications 14 à 17, **caractérisé en ce qu'**au moins pour un sens de transmission (3, 4) des blocs de données (33.0, ..., 33. Q-1; 37.0, ..., 37. R-1) de longueur maximale possible sont utilisables.

19. Appareil testeur selon l'une quelconque des revendications 14 à 18, **caractérisé en ce que** le signal de test et/ou le signal de réponse sont des signaux de bande de base.
